**Europäisches Patentamt**

**European Patent Office**

**Office européen des brevets**

(11) Veröffentlichungsnummer: **0 246 578**

**A1**

(12) **EUROPÄISCHE PATENTANMELDUNG**

(21) Anmeldenummer: **87107111.4**

(22) Anmeldetag: **16.05.87**

(51) Int. Cl.4: **C09D 3/74** , **F28F 13/18**

(30) Priorität: **20.05.86 JP 113621/86**

(43) Veröffentlichungstag der Anmeldung:
**25.11.87 Patentblatt 87/48**

(84) Benannte Vertragsstaaten:
**BE DE ES FR IT SE**

(71) Anmelder: **NIHON PARKERIZING CO., LTD.**
**15-1, 1-Chome, Nihonbashi**
**Chuo-ku Tokyo 103(JP)**

(72) Erfinder: **Kaneko, Hideaki**
**20-1, 2-Chome, Rokugatsu**
**Adachi-Ku Tokyo(JP)**
Erfinder: **Ogino, Takao**
**1-111, Maeda Heights 511-2, Maedacho**
**Totsuka-Ku**
**Yokohama-Shi Kanagawa-Kne Tokyo(JP)**
Erfinder: **Sako, Ryosuke Nihon Parkerizing**
**Ichikawa Dormitory**
**27-3, 1-Chome, Motokitakata**
**Ichikawa-Shi Chiba-Ken(JP)**

(74) Vertreter: **Rieger, Harald, Dr.**
**Reuterweg 14**
**D-6000 Frankfurt am Main(DE)**

(54) **Verfahren zur Behandlung von Wärmeaustauscherflächen.**

(57) Bei einem Verfahren zur Behandlung von Wärmeaustauscheroberflächen aus Aluminium durch Aufbringen eines hydrophilen Überzuges mit hoher Haftfestigkeit bringt man mindestens einzelne Bereiche der Aluminiumoberfläche mit einer Dispersion in Kontakt, die eine Verbindung mit mindestens einer Silanolgruppe (-SiOH) und Polyvinylpyrrolidon enthält.

Vorzugsweise erhält die Wärmeaustauscheroberfläche vor dem Kontakt mit der Dispersion einen chemischen Konversionsüberzug, insbesondere einen Chromatüberzug, eine anodisch erzeugte Oxidschicht oder einen Polymerüberzug. Die Dispersion sollte 1 bis 10 Gew.-% einer mindestens eine Silanolgruppe aufweisende Verbindung und 1 bis 20 Gew.-% Polyvinylpyrrolidon bei einem Gewichtsverhältnis dieser Komponenten von (10 bis 0,1):1 enthalten und anschließend aufgetrocknet werden. Das angestrebte Schichtgewicht liegt im Bereich von 0,2 bis 2,0 g/m².

## Verfahren zur Behandlung von Wärmeaustauscherflächen

Die Erfindung betrifft ein Verfahren zur Behandlung von Wärmeaustauscheroberflächen durch Aufbringen eines hydrophilen Überzuges mittels einer Feinpartikel enthaltenden Dispersion.

Üblicherweise werden Wärmeaustauscher so ausgelegt, daß zur Steigerung der wärmeabgebenden oder kühlenden Wirkung die Flächen der wärmeabgebenden und kühlenden Teile möglichst groß sind, weswegen sie mit äußerst geringem Lamellenabstand konstruiert werden. Wird der Wärmeaustaucher zu Kühlzwecken verwendet, kondensiert Luftfeuchtigkeit auf der Oberfläche des Wärmeaustauschers, insbesondere in den Lamellenspalten. Je hydrophober die Lamellenoberflächen sind, desto leichter bildet das Kondenswasser Wassertropfen, verstopft die Lamellenspalten, erhöht den Durchtrittswiderstand von Luft und senkt die Wärmeaustauschrate. Außerdem tritt der Nachteil auf, daß die in den Lamellenspalten haftenden Wassertropfen vom Ventilator des Wärmeaustauschers in die Luft geblasen und aus dem im Gerät unten angebrachten Wasserauffangbehälter herausgedrückt werden. Gegebenenfalls kann dadurch die Umgebung des Wärmeaustauschers naßgespritzt werden.

Auch bei Verwendung für Heizzwecke setzt sich im Winter an im Freien stehenden Geräten Reif-, Tau-und Nebelfeuchtigkeit an, welche die Heizwirkung verschlechtert. Von Zeit zu Zeit wird daher der Betrieb dew Wärmeaustauschers umgekehrt, das im Freien stehende Gerät beheizt und die Feuchtigkeit beseitigt. Eine solche kurzzeitige und wirksame Beseitigung des Feuchtigkeitsniederschlages ist für die Funktion von kühlenden und heizenden Klimaanlagen unabdingbar.

Zwecks Entfernung der Feuchtigkeit ist es vorteilhaft, die Wärmeaustauscheroberflächen hydrophil zu gestalten, um eine Verstopfung in den Lamellenspalten der kühlenden Teile des Wärmeaustauschers durch zurückbleibende Wassertropfen zu vermeiden. Hierzu ist es bekannt, Überzüge aus Dispersionen von Kieselsäure, Silikat, Kalziumkarbonat und Aluminiumhydroxid aufzubringen. Jedoch neigen derartige Substanzen mit zunehmender Betriebsdauer zur Ablösung und zum Herabrieseln bzw. zum Verwirbeln, was wegen des unangenehmen Geruchs zu einer erheblichen Belästigung führt. Ein weiterer Nachteil der mit diesen Subtanzen erzeugten Überzüge ist, daß sich mit der Zeit ihre hydrophilen Eigenschaften verringern.

Mit dem Ziel, die vorgenannten Nachteile auszuschalten, ist es weiterhin bekannt, derartige Dispersionen mit einem Harz zu versetzen. In vielen Fällen sinkt jedoch der hydrophile Charakter des Überzuges in dem Ausmaß, in dem der Harzgehalt der Dispersion steigt. Dies rührt von den generellen Eigenschaften organischer hochmolekularer Harze. Es ist bei Harzüberzügen schwierig, einen sogenannten Kontaktwinkel für einen Wassertropfen von weniger als 30°C zu erreichen, was wiederum mit Schwierigkeiten beim Erhalt einer guten Wasserbenetzbarkeit der Oberfläche verbunden ist.

Aus den vorgenannten Gründen schließen sich gute Waserbenetzbarkeit und Haftung des Überzuges bei den bekannten Verfahren gegenseitig weitgehend aus. Der Zusatz von Tensiden brachte insoweit ebenfalls keine Verbesserung, als sich das Tensid im Wasser auflöst, weggespült wird und damit seine Wirksamkeit verliert. Das heißt, auch auf diese Weise sind langfristig keine Überzüge mit konstanten hydrophilen Eigenschaften zu erhalten.

Neben den vorstehend behandelten Problemen der Benetzbarkeit und der Haftung spielen Korrosionserscheinungen, die bei Anwendung der vorgenannten Verfahren auftreten, eine wichtige Rolle. Man hat daher auch versucht, den Korrosionswiderstand durch Aufbringen eines Chromatüberzuges zu verbessern. Anfänglich sind derartige Überzüge durchaus auch hydrophil. Mit der Zeit verliert sich diese Eigenschaft, so daß sie letztlich nur noch einen hohen Korrosionsschutz bewirken.

Zur Vermittlung von Korrosionsschutz für Wärmeaustauscheroberflächen sind außer der Chromatierbehandlung noch die anodische Oxidation und die Beschichtung mit Harz gebräuchlich. Nach derartigen Verfahren erzeugte Überzüge sind wasserabweisend.

Bei der Fertigung von Wärmeaustauschern sind zwei Verfahrensvarianten üblich. Eine besteht darin, die Aluminiumteile aus dem Band zu stanzen, umzuformen, zu Bauteilen zu verschweißen und schließlich einer Behandlung zum Korrosionsschutz und gegebenenfalls noch zur Erzeugung eines hydrophilen Überzuges zu unterwerfen. Die andere Variante sieht vor, auf das Aluminiumband zunächst den Überzug aufzubringen und danach die Teile auszustanzen, umzuformen etc. Die so vorgefertigten Bauteile werden dann in der Regel durch Löten verbunden und mit dem hydrophilen Überzug versehen.

Spezielle Probleme treten bei Wärmeaustauscheroberflächen von Klimageräten im Automobilbau auf, weil hierbei Geräte mit möglichst geringen Abmessungen bei dennoch hohem Wirkungsgrad gefragt sind. Sie bestehen darin, daß wegen der geringen Abmessungen möglichst dicht aufeinanderfolgende Lamellen mit entsprechend engen Luftkanälen erforderlich sind, die bei Tropfenbildung den Luftdurchtritt besonders stark behindern.

Aufgabe der Erfindung ist es, ein Verfahren zur Behandlung von Wärmeaustauscheroberflächen aus Aluminium bereitzustellen, das die Nachteile der bekannten Verfahren nicht aufweist und zu Oberflächen führt, die sich durch gute hydrophile Eigenschaften auszeichnen.

Die Aufgabe wird gelöst, indem das Verfahren der eingangs genannten Art entsprechend der Erfindung derart ausgestaltet wird, daß man mindestens einzelne Bereiche der Aluminiumoberfläche mit einer Dispersion in Kontakt bringt, die eine Verbindung mit mindestens einer Silanolgruppe (-SiOH) und Polyvinylpyrrolidon enthält.

Für die Durchführung des erfindungsgemäßen Verfahrens geeignete Verbindungen mit mindestens einer Silanolgruppe sind z.B. Wassergläser auf Basis Natrium-, Kalium und/oder Litiumsilikat und insbesondere feinteilige Kieselsäure. Diese Verbindungen vermitteln, auf die Aluminiumoberfläche aufgebracht, hydrophile Eigenschaften. Durch die gleichzeitige Gegenwart von Polyvinylpyrrolidon wird die Haftung der mindestens eine Silanolgruppe aufweisenden Verbindung verstärkt, wobei auch nach langer Betriebsdauer des Wärmeaustauschers Haftung und hydrophile Eigenschaft erhalten bleiben. Üblicherweise wird Polyvinylpyrrolidon mit einem Molekulargewicht von 1.000 bis 500.000 verwendet.

Wenn Wärmeaustauscher behandelt werden sollen, die in vergleichsweise wenig korrosiver Umgebung arbeiten, z.B. häuslichen Klimaanlagen, kann der hydrophile Eigenschaften verleihende Überzug direkt auf die blanke Metalloberfläche aufgebracht werden. Sofern jedoch hoher Korrosionswiderstand verlangt wird, sind zusätzliche Maßnahmen empfehlenswert. Entsprechend einer bevorzugten Ausgestaltung der Erfindung bringt man auf mindestens einzelne insbesondere korrosionsgefährdete Bereiche des Wärmeaustauschers vor dem Kontakt mit der Dispersion einen chemischen Konversionsüberzug, eine anodisch erzeugte Oxidschicht oder einen Polymerüberzug auf. Geeignete chemische Konversionsüberzüge können durch alkalische Chromatbehandlung, durch Chromatier-, Zinkphosphat-und durch Titan-und Zirkonphosphat-Verfahren erhalten werden. Titan- und Zirkonphosphat sind wegen der Chromfreiheit insbesondere in jüngerer Zeit interessant geworden. Besonders bevorzugt ist die Aufbringung eines Chromatüberzuges, weil durch die Chromatierungslösung auch schwer zugängliche und kompliziert geformte Bereiche des Wärmeaustauschers erreicht werden und somit auch diese Bereiche einwandfrei geschützt werden.

Bei der Fertigung der Geräte werden überlicherweise die einzelnen Elemente zunächst zusammengebaut, dann gereinigt, insbesondere auch von überschüssigem Lötmaterial befreit, entsprechend der bevorzugten Ausführungsform der Erfindung mit einem chemischen Konversionsüberzug oder dergleichen versehen und - schließlich mit der Dispersion einer mindestens eine Silanolgruppe enthaltenden Verbindung und Polyvinylpyrrolidon behandelt. Deren Temperatur liegt im allgemeinen im Bereich von Raumtemperatur und 80°C. Die Behandlungsdauer bei der Tauchbehandlung, z.B. bei der Herstellung von Wärmeaustauschern für Klimaanlagen für Automobile, beträgt etwa 3 sec. bis 10 min.

Gemäß einer bevorzugten Ausgestaltung der Erfindung bringt man die Aluminiumoberflächen mit einer Dispersion in Kontakt, die 1 bis 10 Gew.-% einer mindestens eine Silanolgruppe aufweisenden Verbindung und 1 bis 20 Gew.-% Polyvinylpyrrolidon enthält.

Bei vorheriger Aufbringung eines chemischen Konversionsüberzuges, einer anodisch erzeugten Oxidschicht oder eines Polymerüberzuges sollten die für die Aluminiumbehandlung üblichen Schichtgewichte eingestellt werden. Bezüglich des hydrophilen Überzuges sind - im Falle von Klimannlagen für Automobile - Schichtgewichte im Bereich von 0,2 bis 2 $g/m^2$ vorteilhaft. Je nach Einsatzgebiet des Wärmeaustauschers können die zweckmäßigsten Schichtgewichte jedoch auch von diesem Bereich geringfügig abweichen.

Im allgemeinen läßt sich sagen, daß bei geringerem Schichtgewicht als oben angegeben die erwünschten hydrophilen Eigenschaften nicht mehr erhalten werden. Bei höheren Schichtgewichten wird eine zusätzliche Verbesserung nicht mehr erzielt.

Entsprechend einer weiteren bevorzugten Ausgestaltung der Erfindung bringt man die Aluminiumoberflächen mit einer Dispersion in Kontakt, in der das Gewichtsverhältnis von mindestens eine Silanolgruppe aufweisender Verbindung und Polyvinylpyrrolidon im Bereich von (10 bis 0,1):1 liegt.

Bei höheren Gehalten an Silanolverbindungen besteht die Gefahr der Ablösung der feinen Partikel, bei geringerem Gehalt verschlechtert sich die hydrophile Eigenschaft des Überzüges und der wasserabweisende Effekt des Polyvinylpyrrolidons verstärkt sich.

Eine weitere vorteilhafte Ausgestaltung der Erfindung sieht vor, die am Werkstück haftende Dispersion bei erhöhter Temperatur, vorzugsweise im Bereich von 80 bis 200°C, aufzutrocknen. Die Behandlung im Umluftofen ist besonders zweckmäßig.

Der vorstehend skizzierte Verfahrensgang des Zusammenbaus, der Reinigung, der Aufbringung des chemischen Konversionüberzuges oder dgl., der Tauchbehandlung in der Dispersion und des Auftrocknens der Dispersion kann bei Wärmeaustauscheranlangen beliebiger Konstruktion angewendet werden.

Der Vorzug des erfindungsgemäßen Verfahrens besteht insbesondere darin, daß es universell einsetzbar ist, d.h. für Wärmeaustauscher beliebiger Konstruktion anwendbar ist. Die mit dem erfindungsgemäßen Verfahren erzielten Überzüge weisen hervorragende hydrophile Eigenschaften auf, die infolge der guten Haftungsverhältnisse über einen langen Zeitraum erhalten bleiben. Dieser Vorteil ist insbesondere für Klimaanlagen in Automobilen, die mit großen Luftmengen beaufschlagt werden, trotz gefordertem hohen Wärmeübergang möglichst geringe Abmessung aufweisen sollen und starken Umweltbelastungen ausgesetzt sind, von großer Bedeutung. Mit Hilfe des erfindungsgemäßen Verfahrens gelingt es, gleichmäßige Überzüge zu erzeugen und selbst schwer zugängliche Bereiche einwandfrei zu beschichten.

Die Erfindung wird anhand der nachfolgenden Beispiele beispielsweise und näher erläutert.

Beispiele 1 bis 5

Zuvor gereinigte Wärmeaustauscher aus Aluminium wurden mit einer Chromatierungslösung auf Basis Chromchromat bei 50°C im Tauchen für die Dauer von 2 min. behandelt, dann mit Wasser gespült und getrocknet. Das erhaltende Überzugsgewicht betrugt 100 mg/m² (berechnet als Cr). Anschließend wurden die Werkstücke mit 5 unterschiedlich zusammengesetzten Dispersionen behandelt, in denen das Gewichtsverhältnis Polyvinylpyrrolidon (mittleres Molekulargewicht ca 40.000) zu Kaliumsilikat (angegeben als $K_2O$ . $3SiO_2$) bei 10:1, 10:3, 10:10, 3:10 bzw. 1:10 lag. Die Summe der Konzentrationen beider Komponenten war mit 2 Gew.-% gleich.

Nach dieser Behandlung wurden die Werkstücke bie 130°C während 2 min. im Umluftoften getrocknet.

Zur Bewertung der Benetzbarkeit wurde der Kontaktwinkel eines Wassertropfens mit der Werkstückoberfläche nach der Goniometermethode ermittelt. Die erzielten Ergebnisse sind in der Tabelle angegeben. Alle Werte für den Kontaktwinkel liegen unter 30°, was für eine gute Benetzbarkeit bzw. gut hydrophile Eigenschaften des Überzuges spricht.

Zur Ermittlung einer eventuellen Veränderung der Eigenschaften des Überzuges wurden die Werkstücke einen Monat lang in fließendem Wasser gelagert. Dann wurde der Kontaktwinkel erneut gemessen. Es zeigte sich, daß praktisch keine Veränderung auftrat (Details sind in der Tabelle angegeben).

Der Korrosionswiderstand wurde nach dem Salzsprühtest gemäß JIS-Z2371 beurteilt. Dabei wurde die Zeit ermittelt, die bis zum Auftreten von Weißrost in einer Menge von 5 % der Werkstückoberfläche verging. Sie betrug 168 bis 240 h.

Vergleichsbeispiele 1 bis 3

Als Vergleich 1 diente ein gereinigtes und lediglich - wie vorstehend angegeben - chromatiertes Werkstück. Die Testergebnisse sind in der Tabelle aufgeführt.

Zum Vergleich 2 wurden - wie oben angegeben - gereinigte und chromatierte Werkstücke mit einer lediglich Polyvinylpyrrolidon enthaltenden Lösung behandelt. Diese wurden dann den obengenannten Tests unterworfen. Es zeigte sich, daß die Benetzbarkeit mit 30° unbefriedigend war. Auch war der Fließwassertest unbefriedigend, da sich infolge der Silikatfreiheit der Überzug nach ca. 24 h abgelöst hatte.

Als Vergleichsbeispiele 3 wurden in gleicher Weise gereinigte und chromatierte Werkstücke in einer nur Kaliumsilikat enthaltenden Dispersion behandelt, so daß ein Überzugsgewicht von 0,5 g/m² resultierte. Obwohl die Benetzbarkeit zunächst und nach dem Fließwassertest sowie das Ergebnis des Salzsprühtests einwandfrei waren, zeigten sich nach der Fließwasserbehandlng unter den üblichen Betriebsbedingungen eines Wärmeaustauschers im Automobil, daß sich der Überzug ablöste.

Beispiele 6 bis 8

Wärmeaustauscher aus Aluminium wurden analog Beispiel 4 behandelt, jedoch wurden mit 0,1 0,3 und 1,0 g/m² Überzüge mit unterschiedlichem Schichtgewicht aufgebracht. Die nach diesem Verfahren erhaltenen Werkstücke wurden den vorgenannten Tests unterworfen. Die Testergebnisse sind in der Tabelle angegeben. Sie waren überwiegend gut.

Wie im Vergleichsversuch 3 wurden nach der Fließwasserbehandlung Wärmeaustauscher im Automobil den üblichen Beanspruchungen unterworfen. Es traten keinerlei Überzugsablösungen auf.

Beispiel 9

Es wurde analog Beispiel 4 verfahren, nur erfolgte die Chromatierung mit einer Lösung auf Basis Chromat/Phosphat (Schichtgewicht 100 mg/m²; berechnet als Cr/PO₄). Die erzielten Testergebnisse sind in der Tabelle aufgeführt.

Vergleichsbeispiel 4

Es wurde Beispiel 9 wiederholt, jedoch die Behandlung des Werkstückes nach der Aufbringung des Chromatüberzuges beendet. Die Ergebnisse sind in der Tabelle wiedergegeben. Benetzbarkeit nach dem Fließwassertest und Korrosionswiderstand sind unbefriedigend.

TABELLE

| | Zusammensetzung des Behandlungsmittels Polyvinylpyrrolidon : -SiOH · Verbindung | | Schichtgewicht g/m² | Kontaktwinkel | | Korrosions- widerstand | Bemerkung |
|---|---|---|---|---|---|---|---|
| | | | | nach Überzugs- ausbildung | nach Fließwasser- test | | |
| Beispiel 1 | 10 : | 1 | 0.6 | 30° | 20° | 168 h | nach der Chromatierung mit CrIII/CrVI |
| " 2 | 10 : | 3 | 0.6 | 20° | 20° | 168 h | " |
| " 3 | 10 : | 10 | 0.6 | 10° | 10° | 240 h | " |
| " 4 | 3 : | 10 | 0.6 | ≤ 5° | 10° | 240 h | " |
| " 5 | 1 : | 10 | 0.6 | ≤ 5° | 10° | 240 h | " |
| Vergleichsbeispiele 1 | — | — | — | 10° | 60° | 168 h | nur chromatiert (CrIII/CrVI) |
| " 2 | 10 : | 0 | 0.6 | 30° | 50° | 168 h | nach der Chromatierung mit CrIII/CrVI |
| " 3 | 0 : | 10 | 0.5 | 5° | 5° | 240 h | " |
| Beispiel 6 | 3 : | 10 | 0.1 | 10° | 20° | 168 h | " |
| " 7 | 3 : | 10 | 0.3 | 5° | 10° | 240 h | " |
| " 8 | 3 : | 10 | 1.0 | 5° | 10° | 240 h | " |
| Beispiel 9 | 3 : | 10 | 0.6 | 5° | 5° | 120 h | nach der Chromatierung mit (CrVI/PO$_4$) |
| Vergleichsbeispiel 4 | — | — | — | 5° | 50° | 72 h | nur chromatiert (CrVI/PO$_4$) |

Anmerkung:

nach Überzugsausbildung : Messung innerhalb von 8 h nach der Überzugsausbildung

nach Fließwassertest : Messung nach 30-tägiger Lagerung in fließendem Wasser

**Ansprüche**

1. Verfahren zur Behandlung von Wärmeaustauscheroberflächen aus Aluminium durch Aufbringen eines hydrophilen Überzuges mittels einer Feinpartikel enthaltenden Dispersion, dadurch gekennzeichnet, daß man mindestens einzelne Bereiche der Aluminiumoberfläche mit einer Dispersion in Kontakt bringt, die eine Verbindung mit mindestens einer Silanolgruppe (-SiOH) und Polyvinylpyrrolidon enthält.

2. Verfahren nach Anspruch 1, dadurch gekennzeichnet, daß man auf mindestens einzelne Bereiche der Wärmeaustauscheroberfläche vor dem Kontakt mit der Dispersion einen chemischen Konversionsüberzug, eine anodisch erzeugte Oxidschicht oder einen Polymerüberzug aufbringt.

3. Verfahren nach Anspruch 2, dadurch gekennzeichnet, daß man vor dem Kontakt mit der Dispersion einen Chromatüberzug aufbringt.

4. Verfahren nach Anspruch 1, 2 oder 3, dadurch gekennzeichnet, daß man die Aluminiumoberflächen mit einer Dispersion in Kontakt bringt, die 1 bis 10 Gew.% einer mindestens eine Silanlogruppe aufweisenden Verbindung und 1 bis 20 Gew.-% Polyvinylpyrrolidon enthält.

5. Verfahren nach einem oder mehreren der Ansprüche 1 bis 4, dadurch gekennzeichnet, daß man die Aluminiumoberflächen derart mit der Dispersion in Kontakt bringt, daß ein Überzug mit einem Schichtgewicht von 0,2 bis 2,0 g/m² resultiert.

6. Verfahren nach einem oder mehreren der Ansprüche 1 bis 5, dadurch gekennzeichnet, daß man die Aluminiumoberflächen mit einer Dispersion in Kontakt bringt, in der das Gewichtsverhältnis von mindestens eine Silanolgruppe aufweisender Verbindung und Polyvinylpyrrolidon im Bereich von (10 bis 0,1): leigt.

7. Verfahren nach einem oder mehreren der Ansprüche 1 bis 6, dadurch gekennzeichnet, daß man die am Werkstück haftende Dispersion anschließend bei erhöhter Temperatur, vorzugsweise im Bereich von 80 bis 200°C, auftrocknet.

## EINSCHLÄGIGE DOKUMENTE

EP 87107111.4

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | EP - A1 - 0 177 086 (SOCIETE CONTINENTALE PARKER) <br><br> * Ansprüche; Seite 6, 4. Absatz * <br><br> -- | 1,3,4, 6,7 | C 09 D 3/74 <br> F 28 F 13/18 |
| X | DERWENT ACCESSION Nr. 73-14 158U, Questel Telesystemes (WPI), Sektion Ch <br><br> DERWENT PUBLICATIONS LTD., London <br><br> * Zusammenfassung * <br><br> & JP-B-73-007 490 (KAO SOAP CO LTD) <br><br> -- | 1 | |
| X | DERWENT ACCESSION Nr. 82-33 767E, Questel Telesystemes (WPIL), Sektion Ch <br><br> DERWENT PUBLICATIONS LTD., London <br><br> * Zusammenfassung * <br><br> & JP-A-57-046 912 (SUNSTAR KK) <br><br> -- | 1 | |
| X | DERWENT ACCESSION Nr. 79-37 667B, Questel Telesystemes (WPI), Sektion Ch <br><br> DERWENT PUBLICATIONS LTD., London <br><br> * Zusammenfassung * <br><br> & JP-A-54-043 237 (SHIKOKU KAKEN KOGYO) <br><br> ---- | 1,6 | |

**RECHERCHIERTE SACHGEBIETE (Int. Cl.4)**

C 09 D
F 28 F
C 04 B
C 23 F
C 23 C
B 05 D

Der vorliegende Recherchenbericht wurde für alle Patentansprüche erstellt.

| Recherchenort | Abschlußdatum der Recherche | Prüfer |
|---|---|---|
| WIEN | 17-07-1987 | PAMMINGER |